(19) **Europäisches Patentamt**
**European Patent Office**
**Office européen des brevets**

(11) **EP 2 284 748 B1**

(12) **FASCICULE DE BREVET EUROPEEN**

(45) Date de publication et mention
de la délivrance du brevet:
**02.10.2013 Bulletin 2013/40**

(51) Int Cl.:
*G06F 21/55* (2013.01)      *G06F 21/62* (2013.01)
*G06F 21/78* (2013.01)      *H04L 9/06* (2006.01)
*H04L 9/08* (2006.01)      *H04L 9/22* (2006.01)

(21) Numéro de dépôt: **10007904.5**

(22) Date de dépôt: **29.07.2010**

(54) **Procédé de contremesure pour protéger des données mémorisées**

Gegenmaßnahme für den Schutz gespeicherter Daten

Countermeasure for the protection of stored data

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **05.08.2009 FR 0903865**

(43) Date de publication de la demande:
**16.02.2011 Bulletin 2011/07**

(73) Titulaire: **STMicroelectronics Rousset SAS
13790 Rousset (FR)**

(72) Inventeur: **Bancel, Frédéric
13560 Senas (FR)**

(74) Mandataire: **Marchand, André et al
OMNIPAT
24 Place des Martyrs de la Résistance
13100 Aix-en-Provence (FR)**

(56) Documents cités:
**WO-A1-03/085881      WO-A2-2007/069236
JP-A- 2007 195 132**

**Description**

La présente invention concerne un procédé de contremesure pour protéger des données sensibles mémorisées, contre des attaques visant à découvrir ces données. Elle concerne également un dispositif portable à microcircuit tel qu'une carte à puce, mettant en oeuvre le procédé.

Les données sensibles peuvent être notamment des clés de chiffrement ou de déchiffrement, et plus généralement des données cryptographiques utilisées ou élaborées lors de calculs cryptographiques, comme des données intermédiaires de tels calculs, et des identifiants qui doivent être conservés secrets. Ces données peuvent être mémorisées de manière temporaire ou permanente dans des registres ou des mémoires, volatiles tels que des mémoires de type RAM, ou non volatiles tels que des mémoires de type ROM et EEPROM.

Les dispositifs à microcircuits mémorisant des données sensibles font parfois l'objet d'attaques visant à déterminer les données qu'ils manipulent. Parmi les attaques connues, les attaques de type SPA (Simple Power Analysis) ou DPA (Differential Power Analysis) consistent à mesurer les courants et tensions entrants et sortants dans le microcircuit au cours de l'exécution d'un programme par le microcircuit, dans le but d'en déduire des données protégées traitées ou utilisées par le microcircuit. Dans ce même but, les attaques de type EMA (Electromagnetic Analysis) se basent sur l'analyse du rayonnement électromagnétique émis par le microcircuit. Les attaques par analyse physique visent les circuits tels que les mémoires et les registres, de type ROM, dans le but de déterminer des données inscrites à la fabrication du circuit, ou les circuits de calcul cryptographiques dans le but de déterminer les calculs effectués.

On connaît également les attaques par injection de faute qui consistent à introduire des perturbations dans le microcircuit pendant qu'il exécute des algorithmes sensibles tels que des algorithmes cryptographiques, ou dans le but de déclencher l'exécution d'une routine de téléchargement émettant sur un port les données qu'il mémorise. Une telle perturbation peut être réalisée en appliquant au microcircuit un ou plusieurs éclairages brefs ou un ou plusieurs pics de tension sur l'un de ses contacts.

Afin de lutter contre ces attaques variées par nature, de nombreuses solutions très différentes les unes des autres ont été apportées. L'invention concerne plus particulièrement celles qui visent à protéger les données mémorisées par un microcircuit, que ce soit de manière permanente ou temporaire.

A cet effet, il est connu de mémoriser des données sensibles sous forme chiffrée à l'aide d'une clé de chiffrement. Dans le cas de mémoires non volatiles telles que des mémoires ROM et EEPROM, la clé de chiffrement reste inchangée durant toute la vie du circuit. Dans le cas de mémoires volatiles (RAM), la clé de chiffrement est modifiée à chaque session, par exemple de manière aléatoire. Quel que soit le type de mémoire, les analyses évoquées précédemment permettent de découvrir la clé de chiffrement. Il en résulte que toutes les données chiffrées avec la clé de chiffrement découverte deviennent accessibles en clair.

Il est également connu de chiffrer chaque donnée sensible en utilisant une clé distincte mémorisée d'une manière permanente dans une mémoire non volatile. Il en résulte que chaque adresse contenant une donnée sensible doit être décodée de manière à sélectionner la clé de déchiffrement correspondante. Cette solution nécessite donc des circuits supplémentaires pour mémoriser plusieurs clés de chiffrement, réaliser le décodage d'adresse et sélectionner la clé correspondant à chaque donnée sensible à lire. En outre, comme les clés sont mémorisées de manière permanente, elles peuvent être téléchargées de manière frauduleuse. Il en résulte que les données deviennent accessibles.

Le document WO 2007/069 236 décrit un procédé pour chiffrer des blocs, dans lequel une clé d'entrée est déterminée pour chaque bloc en fonction d'une clé racine, d'un vecteur d'initialisation, et du contenu d'un des blocs préalablement chiffré, chaque bloc étant chiffré à l'aide de la clé d'entrée déterminée pour le bloc.

Un mode de réalisation concerne un procédé d'accès en écriture ou en lecture par un composant électronique à des adresses de mémorisation de données, comprenant des étapes consistant à : générer une première clé secrète pour une première donnée d'une liste ordonnée de données lues ou à écrire, et pour chaque donnée de la liste, suivant la première donnée, générer une clé secrète distincte à l'aide d'une fonction déterministe appliquée à une clé secrète générée pour une précédente donnée de la liste, et à la donnée précédente avant ou après application à la donnée précédente d'une opération cryptographique, et appliquer l'opération cryptographique à la donnée, en utilisant la clé secrète générée pour la donnée. Selon un mode de réalisation, le procédé comprend des étapes de comparaison d'une dernière donnée accédée de la liste et traitée par l'opération cryptographique à une donnée de référence, et si la comparaison révèle une différence, de passage du composant électronique à un état d'erreur.

Selon un mode de réalisation, la fonction déterministe est une fonction de génération de nombres pseudo-aléatoires.

Selon un mode de réalisation, la génération d'une clé secrète pour une donnée de la liste est déclenchée par une instruction particulière détectée avant l'accès à la donnée, durant l'exécution d'un programme par le composant électronique.

Selon un mode de réalisation, la génération d'une clé secrète pour une donnée de la liste est déclenchée lorsque l'adresse de la donnée appartient à un ensemble d'adresses particulier.

Selon un mode de réalisation, si une clé secrète n'est pas générée pour une donnée accédée, l'opération cryptographique appliquée à la donnée accédée utilise une clé secrète commune.

Selon un mode de réalisation, la première clé secrète est générée en appliquant la fonction déterministe à une valeur initiale.

Selon un mode de réalisation, le procédé comprend deux accès successifs en lecture à une même adresse de mémorisation de donnée, effectués en utilisant deux clés secrètes distinctes afin que l'opération cryptographique fournisse deux données différentes.

Selon un mode de réalisation, le procédé comprend deux accès successifs en lecture à deux adresses de mémorisation distinctes de donnée, effectués en utilisant deux clés secrètes distinctes telles que l'opération cryptographique fournit deux données identiques.

L'invention concerne également un composant électronique configuré pour mettre en oeuvre le procédé précédemment défini.

Selon un mode de réalisation, le composant électronique comprend un processeur configuré pour mettre en oeuvre le procédé précédemment défini.

Selon un mode de réalisation, le composant électronique comprend un processeur, des mémoires connectées au processeur par un bus, et un dispositif de contremesure interposé entre le processeur et le bus, et configuré pour mettre en oeuvre le procédé précédemment défini.

Selon un mode de réalisation, le composant électronique comprend un processeur, des mémoires connectées au processeur par un bus, et un dispositif de contremesure interposé entre chaque mémoire et le bus et configuré pour mettre en oeuvre le procédé précédemment défini.

L'invention concerne également un dispositif portable à microcircuit, comprenant un composant électronique tel que celui défini précédemment.

Des exemples de réalisation de l'invention seront décrits dans ce qui suit, à titre non limitatif en relation avec les figures jointes parmi lesquelles :

la figure 1 représente schématiquement un dispositif de contremesure pour protéger des données mémorisées dans un composant électronique, selon un mode de réalisation,

les figures 2A à 2D sont des chronogrammes illustrant des étapes d'un procédé d'accès en lecture à des données protégées dans le composant électronique, selon un mode de réalisation,

les figures 3A à 3D sont des chronogrammes illustrant des étapes d'un procédé d'accès en écriture à des données protégées dans le composant électronique, selon un mode de réalisation,

la figure 4 représente schématiquement un dispositif de contremesure pour protéger des données mémorisées dans un composant électronique, selon un autre mode de réalisation,

la figure 5 représente un composant électronique équipé du dispositif de contremesure, selon un mode de réalisation,

la figure 6 représente un composant électronique équipé du dispositif de contremesure, selon un autre mode de réalisation,

la figure 7 est un organigramme représentant des étapes d'un procédé d'accès en lecture à des données mémorisées, selon un mode de réalisation,

la figure 8 est un organigramme représentant des étapes d'un procédé d'accès en écriture à des données mémorisées, selon un mode de réalisation,

la figure 9 représente schématiquement deux mémoires du composant électronique, protégées par des dispositifs decontremesure.

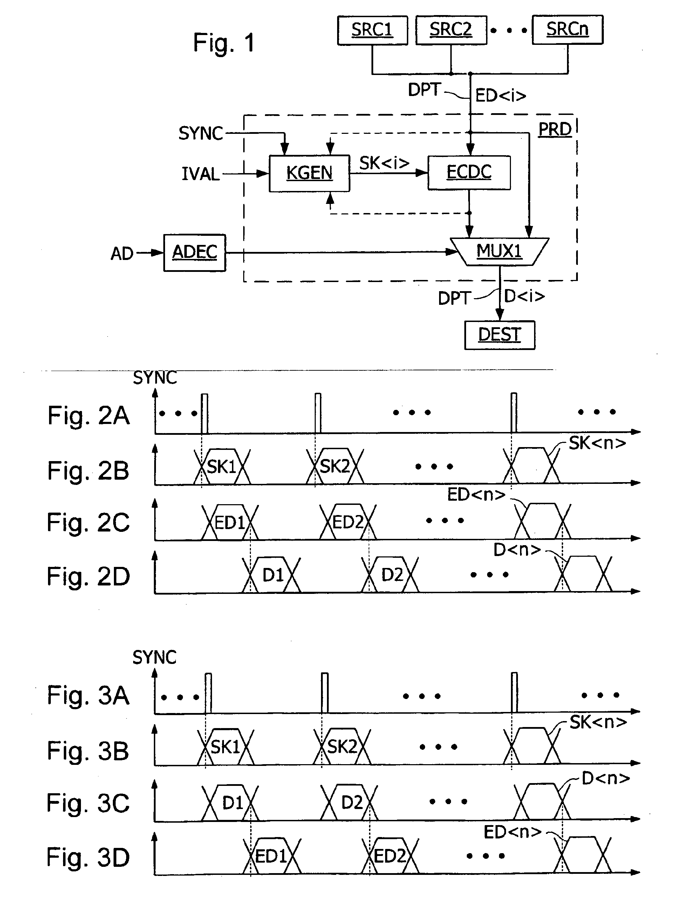

La figure 1 représente un chemin de donnée DPT dans un composant électronique, entre des sources de données SRC1, SRC2, ... SRCn et une destination DEST du chemin de donnée. Un dispositif de contremesure PRD pour protéger des données mémorisées dans le composant électronique est interposé sur le chemin DPT. Les sources SRC1-SRCn et la destination DEST sont par exemple des adresses dans une mémoire et/ou des registres, appartenant au composant ou externes au composant. Le dispositif PRD comprend une unité de calcul cryptographique ECDC interposée sur le chemin de donnée DPT entre les sources de données SRC1-SRCn et la destination DEST du chemin de donnée. L'unité ECDC applique une opération cryptographique à une donnée ED<i> reçue et fournit une donnée transformée D<i>. L'opération cryptographique peut être une opération de chiffrement ou de déchiffrement, par exemple de type symétrique. Le dispositif PRD peut également comprendre un multiplexeur MUX1 comportant une entrée connectée à une sortie de donnée de l'unité ECDC, une entrée connectée aux sources de donnée SRC1-SRCn et une sortie connectée à la destination DEST. Le multiplexeur MUX1 est commandé par un décodeur d'adresse ADEC recevant en entrée une adresse source ou destination AD d'une donnée ED<i> transférée dans le chemin DPT. Le multiplexeur MUX1 permet ainsi optionnellement de chiffrer/déchiffrer ou de laisser une donnée ED<i> circuler dans le chemin DPT sans être chiffrée/déchiffrée, en fonction de l'adresse de la source ou de la destination de la donnée.

Selon un mode de réalisation, le dispositif de contremesure PRD comprend également une unité de génération de clé KGEN fournissant des clés secrètes SK<i> à une entrée de clé de l'unité ECDC. L'unité ECDC est configurée pour chiffrer ou déchiffrer chaque donnée reçue ED<i> avec la dernière clé SK<i> reçue de l'unité KGEN. L'unité KGEN reçoit un signal de synchronisation déclenchant la fourniture d'une clé SK<i> à l'unité ECDC. L'unité KGEN est configurée pour générer une première clé SK1 en appliquant une fonction déterministe PRF à une valeur d'initialisation IVAL, et pour générer une nouvelle clé SK<n+1> en appliquant cette fonction déterministe à la clé précédemment générée SK<n> :

$$SK1 = PRF(IVAL) \qquad\qquad (1)$$

$$SK<n+1> = PRF(SK<n>) \qquad\qquad (2)$$

La fonction déterministe PRF employée par l'unité KGEN pour générer des les clés SK<i> peut être une fonction de génération de nombres pseudo aléatoires. Une telle fonction peut combiner des opérations logiques telles que des décalages, des additions et/ou des multiplications. Elle peut par exemple être réalisée à l'aide d'un registre à décalage avec rétroaction linéaire LFSR (Linear Feedback Shift Register). Elle peut également être réalisée à l'aide d'une table de substitution SBOX (Substitution Box) telle que celles utilisées dans les algorithmes de chiffrement symétriques, la table de substitution étant rebouclée sur elle-même de façon à ce que l'état suivant de la table dépende de son état précédent. Le signal SYNC peut être émis par le décodeur d'adresse ADEC lorsqu'une adresse ou une zone d'adresses spécifique est accédée. Il peut également être émis par un processeur du composant électronique exécutant un programme, lors de la lecture d'un code d'instruction particulier.

Les données protégées ED<i> sont accédées dans un ordre déterministe, défini généralement par le programme exécuté par le composant électronique. Il suffit donc de chiffrer et mémoriser dans le composant électronique les données protégées dans l'ordre dans lequel elles seront lues par le composant électronique, en utilisant des clés obtenues par la fonction déterministe mise en oeuvre par l'unité KGEN, à partir d'une même valeur initiale également mémorisée dans le composant électronique. L'unité ECDC peut être réalisée par de simples portes logiques OU Exclusif (XOR) combinant chacune un bit d'une donnée à chiffrer ou à déchiffrer ED<i> avec un bit respectif d'une clé SK<i>.

Les figures 2A, 2B, 2C et 2D sont des chronogrammes respectivement, du signal SYNC, d'un signal fourni à une entrée de clé de l'unité ECDC, d'un signal fourni à une entrée de donnée de l'unité ECDC, et d'un signal de sortie de donnée de l'unité ECDC, par exemple dans le cas d'une lecture de données chiffrées. Sur la figure 2A, le signal SYNC comprend des impulsions qui sont émises par le composant à des instants où une donnée doit être déchiffrée par l'unité ECDC. A chaque impulsion du signal SYNC, l'unité KGEN génère une clé SK1, SK2, ... SK<n> qu'il transmet à l'unité ECDC (figure 2B). Parallèlement, l'unité ECDC reçoit une donnée à déchiffrer ED1, ED2, ... ED<n> (figure 2C) et la déchiffre en utilisant la dernière clé reçue. Ainsi, l'unité ECDC fournit des données déchiffrées D1, D2, ... DSK<n> (figure 2D) correspondant aux données chiffrées ED1, ED2, ... ED<n> reçues.

Les figures 3A, 3B, 3C et 3D sont des chronogrammes respectivement, du signal SYNC, du signal fourni à une entrée de clé de l'unité ECDC, du signal fourni à une entrée de donnée de l'unité ECDC, et du signal de sortie de donnée de l'unité ECDC, par exemple dans le cas d'une écriture de données. A chaque impulsion du signal SYNC représentée sur la figure 3A, l'unité KGEN génère une clé SK1, SK2, ... SK<n> qu'il transmet à l'unité ECDC (figure 3B). Parallèlement, l'unité ECDC reçoit une donnée à chiffrer D1, D2, ... D<n> (figure 3C) et la chiffre en utilisant la dernière clé reçue. Ainsi, l'unité ECDC fournit des données chiffrées ED1, ED2, ... ED<n> (figure 3D) correspondant aux données non chiffrées D1, D2, ... D<n> reçues.

Dans le cas de données sensibles mémorisées dans une mémoire non volatile, l'ordre dans lequel ces données seront lues est défini par le programme exécuté par le composant électronique. Cet ordre qui définit une liste ordonnée d'adresses accédées est respecté pour définir avec quelle clé secrète SK<i> générée par l'unité KGEN chaque donnée à écrire est chiffrée avant d'être inscrite dans la mémoire. Pour la lecture des données sensibles ainsi mémorisées, l'unité KGEN est tout d'abord initialisée avec la même valeur initiale que celle utilisée pour le chiffrement des données mémorisées. A chaque lecture de l'adresse d'une donnée mémorisée, l'unité KGEN fournit une nouvelle clé secrète à utiliser pour déchiffrer la donnée lue.

Pour mémoriser des données sensibles dans une mémoire volatile, l'unité KGEN peut être initialisée avec une valeur initiale générée aléatoirement. Ensuite chaque donnée sensible à écrire dans la mémoire est préalablement chiffrée à l'aide d'une nouvelle clé secrète générée par l'unité KGEN. Pour accéder aux données sensibles ainsi mémorisées dans la mémoire volatile, l'unité KGEN est tout d'abord initialisée avec la valeur initiale utilisée lors de l'écriture des données sensibles dans la mémoire volatile. Les données sensibles sont ensuite lues et déchiffrées dans l'ordre où elles ont été écrites dans la mémoire, en utilisant une nouvelle clé secrète générée par l'unité KGEN à chaque lecture d'une donnée sensible. La valeur initiale utilisée par l'unité KGEN est donc différente à chaque session d'activation du composant électronique, ou à chaque accès en écriture dans la mémoire volatile.

EP 2 284 748 B1

Grâce à ces dispositions, un accès frauduleux aux données protégées nécessite à la fois de déterminer la zone mémoire non volatile où se trouve mémorisée la valeur initiale IVAL et d'analyser cette zone mémoire, d'analyser l'unité de génération de clé KGEN pour déterminer la fonction déterministe utilisée, d'analyser l'unité ECDC pour déterminer l'algorithme de chiffrement mis en oeuvre, de localiser les zones mémoire où sont mémorisées les données protégées et d'analyser ces zones afin d'en extraire les données chiffrées. Si une opération de téléchargement des données dans une mémoire peut être déclenchée frauduleusement, il apparaît difficile d'initialiser en même temps l'unité KGEN avec la bonne valeur initiale et de la synchroniser correctement pour déchiffrer les données téléchargées. Par ailleurs, le dispositif de contremesure PRD peut être réalisé sur une surface de circuit intégré relativement faible, et n'impose lors de l'écriture du programme exécuté par le composant électronique que de déterminer l'ordre d'accès aux données protégées, et de commander l'initialisation de l'unité KGEN avec la valeur initiale utilisée lors de l'écriture des données protégées.

Il est à noter que durant le fonctionnement du composant électronique, l'unité KGEN peut être initialisée plusieurs fois à des valeurs différentes. Il peut également être prévu de ne pas utiliser toutes les clés générées par l'unité KGEN en envoyant plusieurs impulsions de synchronisation à celle-ci sans activer l'unité ECDC pour chiffrer ou déchiffrer une donnée.

Dans des modes de réalisation représentés sur la figure 1 en traits interrompus, l'unité de génération de clé KGEN calcule une nouvelle clé en fonction d'une clé précédente et d'une donnée précédemment fournie en entrée de l'unité ECDC ou en sortie de cette dernière :

$$SK1 = PRF(IVAL) \text{ et} \tag{3}$$

$$SK<n+1> = PRF(SK<n>, D<n>) \text{ ou bien} \tag{4}$$

$$SK<n+1> = PRF(SK<n>, ED<n>) \tag{5}$$

Dans ces modes de réalisation, les données doivent être connues à l'avance. De cette manière, il est possible de contrôler qu'aucune donnée d'une liste ordonnée de données lues n'a été modifiée frauduleusement, en comparant une dernière donnée de la liste, lue et traitée par l'unité ECDC avec une valeur de référence. Ces modes de réalisation permettent également de protéger des données contre une attaque par injection de faute DFA (Differential Fault Analysis) visant à modifier la valeur de données traitées par le composant.

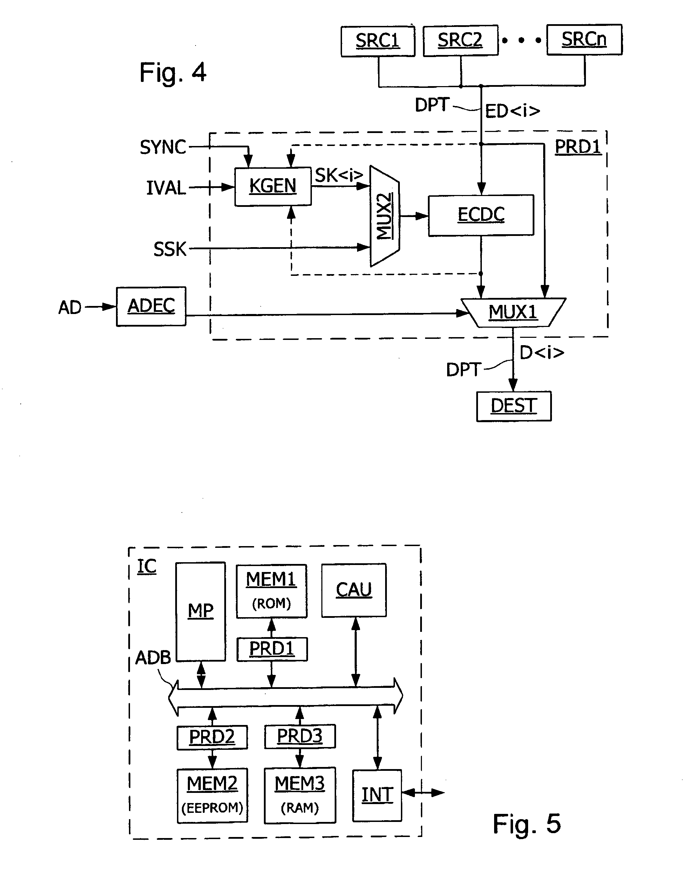

La figure 4 représente un dispositif de contremesure PRD1 selon un autre mode de réalisation. Sur la figure 4, le dispositif PRD1 diffère du dispositif PRD représenté sur la figure 1 en ce qu'il comprend un second multiplexeur MUX2 interposé entre l'unité de génération de clé KGEN et l'unité de calcul cryptographique ECDC. Le multiplexeur MUX2 envoie à l'unité ECDC soit une clé SK<i> fournie par l'unité KGEN, soit une clé fixe SSK prévue pour chiffrer des données moins sensibles, en fonction de l'adresse AD de la donnée lue ou à mémoriser. A cet effet, le multiplexeur MUX2 est commandé par un signal issu du décodeur d'adresse ADEC. Ici encore, l'unité KGEN peut ou non utiliser la donnée précédemment traitée par l'unité ECDC, avant ou après chiffrement ou déchiffrement.

La figure 5 représente un composant électronique IC comprenant un processeur MP, par exemple de type microprocesseur ou microcontrôleur, des mémoires MEM1, MEM2, MEM3, une unité d'interface INT permettant au composant de communiquer avec des équipements externes, et des bus d'adresse et de donnée ADB auxquels sont connectés le processeur, les mémoires et l'unité d'interface. Les mémoires MEM1, MEM2 sont par exemple des mémoires non volatiles et la mémoire MEM3 une mémoire volatile par exemple de type RAM. Les mémoires MEM1 et MEM2 sont par exemple de type ROM et EEPROM. Le composant IC peut également comprendre des circuits de calcul cryptographique CAU également connectés aux bus ADB.

Selon un mode de réalisation, le composant électronique IC comprend des dispositifs de contremesure PRD1, PRD2, PRD3 tels que celui précédemment décrit en référence à la figure 1 ou 4, interposés entre chacune des mémoires MEM1, MEM2, MEM3 et le bus de donnée des bus ADB. Dans un mode de réalisation, chacun des dispositifs PRD1, PRD2, PRD3 comporte sa propre unité de génération KGEN de clé. Dans un autre mode de réalisation, une unité KGEN peut être partagée entre deux ou davantage des dispositifs de contremesure PRD1, PRD2, PRD3, pour fournir une clé secrète aux unités calcul cryptographique ECDC de chacun des dispositifs decontremesure, au fur et à mesure qu'une donnée sensible est accédée dans l'une ou l'autre des mémoires MEM1, MEM2, MEM3.

Dans un chemin de donnée entre deux mémoires du composant IC, par exemple entre une mémoire non volatile MEM1, MEM2 et une mémoire volatile MEM3, plusieurs opérations de chiffrement/déchiffrement peuvent être

5

réalisées. Ainsi, des données lues dans la mémoire MEM1 ou MEM2 peuvent être déchiffrées par le dispositif PRD1 ou PRD2 et chiffrées avec d'autres clés par le dispositif PRD3.

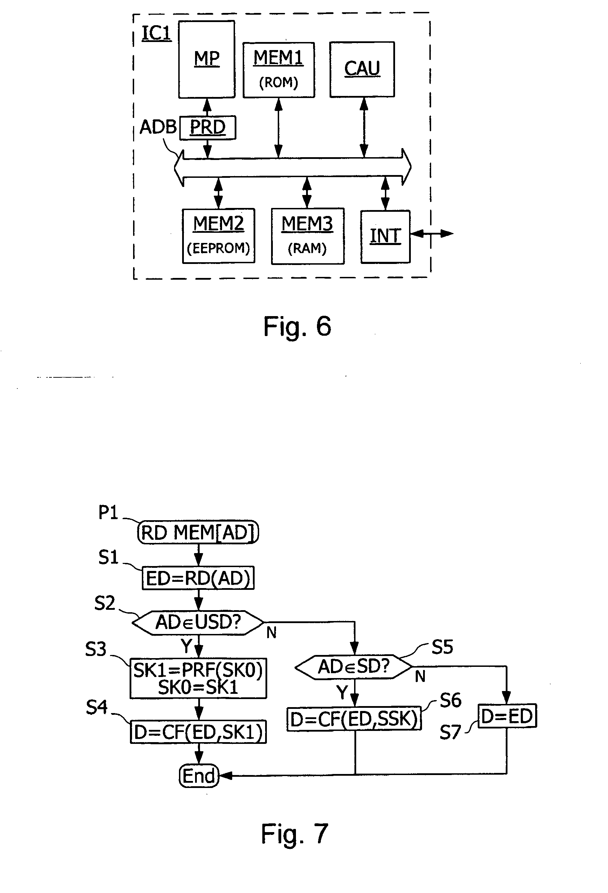

La figure 6 représente un composant électronique IC1 selon un autre mode de réalisation. Le composant IC1 diffère du composant IC uniquement en ce qu'il ne comprend qu'un seul dispositif de contremesure PRD interposé entre le processeur MP et les bus ADB. De cette manière, les données sensibles lues dans les mémoires, sont transmises par le bus de donnée sous forme chiffrée et déchiffrées juste avant d'être utilisées par le processeur MP. Les données sensibles fournies par le processeur MP, sont chiffrées avant d'être transmises par le bus de donnée, pour être mémorisées sous forme chiffrée dans une mémoire ou un registre.

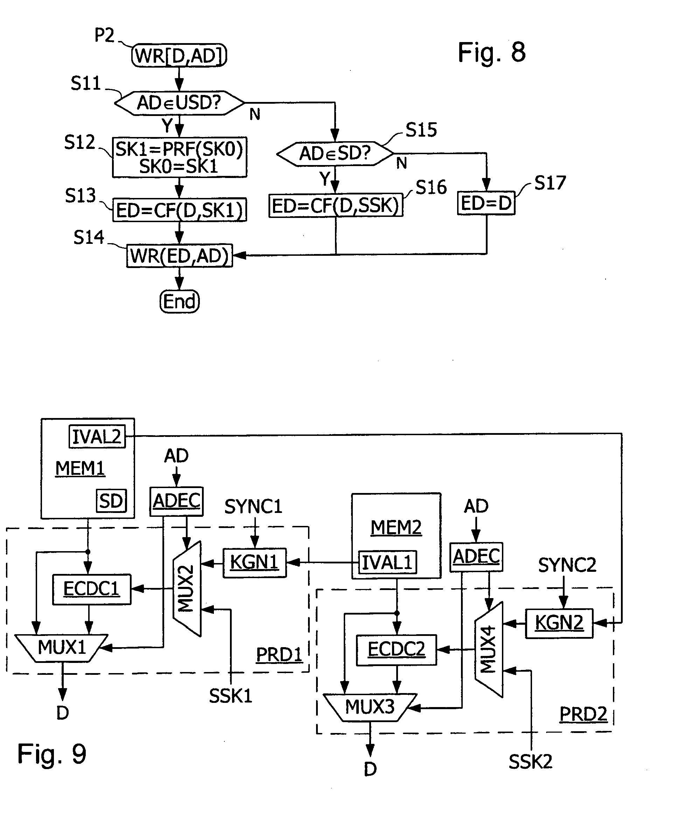

Par ailleurs, tout ou partie du dispositif de contremesure peut être mis en oeuvre dans un programme exécuté par le processeur MP. Ainsi, les figures 7 et 8 représentent des séquences d'étapes d'un procédé de contremesure selon un mode de réalisation. La figure 7 représente une séquence de lecture P1 d'une donnée mémorisée à une adresse AD. La séquence P1 comprend des étapes S1 à S7. A l'étape S1, le processeur MP lit une donnée ED à l'adresse AD. A l'étape S2, si l'adresse de lecture correspond à une adresse de mémorisation d'une donnée sensible, le processeur exécute les étapes S3 et S4, sinon il exécute l'étape S5. A l'étape S3, le processeur commande la génération d'une nouvelle clé SK1, en fonction d'une clé précédente SK0, et la nouvelle clé SK1 est mémorisée comme clé précédente SK0. Si la clé SK1 est une première clé d'une liste ordonnée de clés générées, la clé SK0 est initialisée à une valeur d'initialisation IVAL avant l'exécution de la séquence P1. La valeur d'initialisation IVAL est celle qui a été utilisée pour initialiser la séquence de clés utilisées lors de l'écriture des données lues. A l'étape S4, le processeur commande le déchiffrement de la donnée ED à l'aide de la clé SK1, pour obtenir une donnée déchiffrée D. A l'étape S5, si l'adresse de lecture appartient aux adresses de données moins sensibles mais protégées par chiffrement, le processeur exécute l'étape S6, sinon il exécute l'étape S7. A l'étape S6, le processeur MP déchiffre la donnée ED pour obtenir une donnée déchiffrée D, en utilisant une clé SSK utilisée pour chiffrer tout ou partie des données moins sensibles mais protégées par chiffrement. A l'étape S7, la donnée ED lue en mémoire correspond à la donnée déchiffrée D. La séquence d'étape P1 se termine à l'issue de l'étape S4, S6 ou S7 par la fourniture de la donnée D non chiffrée.

La figure 8 représente une séquence d'écriture P2 d'une donnée D à une adresse AD. La séquence P2 comprend des étapes S11 à S17. A l'étape S11, le processeur MP détermine si l'adresse d'écriture correspond à une adresse de mémorisation d'une donnée sensible. Si tel est le cas, le processeur exécute les étapes S12 à S14, sinon il exécute l'étape S15. A l'étape S12, le processeur commande la génération d'une nouvelle clé SK1 à utiliser pour chiffrer la donnée D en fonction d'une clé précédente SK0, et la nouvelle clé SK1 est mémorisée comme clé précédente SK0. Si la clé SK1 est une première clé d'une liste ordonnée de clés générées, la clé SK0 est initialisée à une valeur d'initialisation IVAL avant l'exécution de la séquence P2. A l'étape S13, le processeur chiffre la donnée D à l'aide de la clé SK1 pour obtenir une donnée chiffrée ED. A l'étape S14, le processeur MP écrit la donnée chiffrée ED à l'adresse AD. A l'étape S15, si la donnée appartient à un ensemble de données moins sensibles mais à protéger par chiffrement, le processeur exécute l'étape S16, sinon il exécute l'étape S17. A l'étape S16, le processeur MP chiffre la donnée D pour obtenir une donnée chiffrée ED, en utilisant la clé SSK utilisée pour chiffrer tout ou partie des données moins sensibles mais protégées par chiffrement. A l'étape S17, la donnée D à mémoriser correspond à la donnée ED à écrire à l'adresse AD. A l'issue des étapes S16 et S17, le processeur MP exécute l'étape S14 pour écrire la donnée ED à l'adresse AD. La séquence d'étape P2 se termine à l'issue de l'étape S14.

Aux étapes S3 et S12, le calcul d'une nouvelle clé peut être entièrement effectué par le processeur ou réalisé par un circuit externe par exemple par le circuit CAU. De même, les opérations de déchiffrement et chiffrement réalisées aux étapes S4, S6, S13 et S16 peuvent être réalisées par le processeur MP ou par un circuit externe tel que le circuit CAU. Par ailleurs, Il peut être noté qu'aux étapes S3 et S12, l'émission du signal SYNC peut ne pas être nécessaire si le processeur MP commande lui-même une nouvelle clé SK1 à chaque fois qu'une donnée sensible doit être chiffrée ou déchiffrée. Les étapes S3 et S12 peuvent également être remplacées par l'émission du signal de synchronisation SYNC pour déclencher la génération d'une nouvelle clé.

La figure 9 représente les mémoires MEM1, MEM2 du composant électronique de la figure 6, protégées par des dispositifs de contremesure PRD1, PRD2, tels que celui représenté sur la figure 4. Ainsi, le dispositif PRD1 comprend une unité de calcul cryptographique ECDC1, des multiplexeurs MUX1, MUX2, et une unité de génération de clé KGN1. L'unité ECDC1 est connectée à une sortie de donnée de la mémoire MEM1. Le multiplexeur MUX1 comporte une entrée connectée à une sortie de donnée de l'unité ECDC1, une entrée connectée à une sortie de donnée de la mémoire MEM1, et une sortie de donnée D. Le multiplexeur MUX2 envoie à l'unité ECDC1 soit une clé fournie par l'unité KGN1, soit une clé fixe SSK1 commune à plusieurs données protégées. L'unité KGN1 est initialisée par une valeur initiale IVAL1 mémorisée dans la mémoire MEM2.

De même, le dispositif PRD2 comprend une unité de calcul cryptographique ECDC2, des multiplexeurs MUX3, MUX4, et une unité de génération de clé KGN2. L'unité ECDC2 est connectée à une sortie de donnée de la mémoire MEM2. Le multiplexeur MUX3 comporte une entrée connectée à une sortie de donnée de l'unité ECDC2, une entrée connectée à la sortie de donnée de la mémoire MEM2, et une sortie de donnée D. Le multiplexeur MUX4 envoie à l'unité ECDC2 soit une clé fournie par l'unité KGN2, soit une clé fixe SSK2 commune à plusieurs données protégées. L'unité KGN2 est initialisée par une valeur initiale IVAL2 mémorisée dans la mémoire MEM1. Les unités KGN1, KGN2 sont synchronisées par des signaux SYNC1, SYNC2 qui peut être identiques ou différents.

Pour découvrir une donnée SD mémorisée dans la mémoire MEM1, il est tout d'abord nécessaire de connaître la valeur initiale IVAL1 mémorisée dans la mémoire MEM2. Il est également nécessaire de connaître l'algorithme de chiffrement mis en oeuvre par l'unité ECDC1 et l'algorithme mis en oeuvre par l'unité KGN1. Si la valeur initiale IVAL1 est chiffrée à l'aide d'une clé de chiffrement générée par l'unité KGN2, il est également nécessaire de connaître l'algorithme de chiffrement mis en oeuvre par l'unité ECDC2 et l'algorithme mis en oeuvre par l'unité KGN2, ainsi que la valeur initiale IVAL2 utilisée par l'unité KGN2. La valeur initiale IVAL2 peut être mémorisée dans la mémoire MEM1 sous forme chiffrée à l'aide de la clé SSK1. Il est alors nécessaire de connaître également cette clé. En d'autres termes, l'accès à une donnée sensible implique la connaissance d'une grande partie des circuits du composant électronique et des données mémorisées.

Certains calculs cryptographiques comme 3-DES (Data Encryption Standard) utilisent deux clés cryptographiques. Le dispositif selon l'invention permet de lire deux clés différentes aux mêmes adresses de la mémoire, en utilisant des clés de déchiffrement SK fournies par l'unité KGEN différentes, c'est-à-dire générées à partir de valeurs précédentes différentes. Ainsi, les deux clés cryptographiques peuvent être obtenues en lisant à deux reprises la ou les mêmes adresses et en déclenchant la génération d'une nouvelle clé de déchiffrement à chaque lecture. En d'autres termes, le composant électronique peut lire deux données différentes à la même adresse de mémorisation. De cette manière, le composant électronique IC, IC1 émet une signature électromagnétique et une signature de consommation électrique identique lors de la lecture des deux clés cryptographiques.

Le dispositif de contremesure selon l'invention peut également permettre de mémoriser une même clé cryptographique à deux adresses différentes sous la forme de deux valeurs différentes résultant d'un chiffrement utilisant deux clés différentes générées par l'unité KGEN à partir de valeur précédentes différentes. De cette manière une clé cryptographique peut être accédée plusieurs fois à des adresses différentes, tandis que le composant électronique émet des signatures électromagnétiques et de consommation électrique différentes.

Il apparaîtra clairement à l'homme de l'art que la présente invention est susceptible de diverses variantes de réalisation et diverses applications. En particulier, l'invention n'est pas limitée à une fonction déterministe fournissant une nouvelle clé secrète en fonction d'une clé secrète précédemment générée, et le cas échéant, d'une donnée précédemment chiffrée ou déchiffrée. En effet, la fonction déterministe peut porter également, par exemple, sur une seconde clé secrète précédemment générées, et/ou toute autre valeur déterminable, telle qu'un numéro d'ordre dans la liste ordonnée de clés secrètes générées, ou l'adresse de la dernière donnée accédée ou de la précédente donnée accédée.

Par ailleurs, le procédé d'accès précédemment décrit n'impose pas que les adresses accédées soient consécutives ou accédées dans un ordre croissant ou décroissant de leurs valeurs respectives, ou que les données soient accédées dans un certain ordre. Il importe simplement que l'ordre dans lequel des données ont été inscrites à ces adresses soit déterminable et que cet ordre soit pris en compte lors de l'accès en lecture à ces adresses, pour que la clé secrète utilisée pour déchiffrer une donnée lue soit celle qui a été utilisée pour chiffrer la donnée. Il n'est pas non plus nécessaire de lire toutes les données écrites lors d'une séquence d'écriture. En effet, si une donnée ne doit pas être nécessairement lue, il suffit de commander deux fois la génération d'une clé à l'unité KGEN pour pouvoir accéder à la donnée suivante dans la séquence. Plus généralement, les données protégées par une clé générée par l'unité KGEN peuvent être lues dans un ordre quelconque, à condition de connaître l'ordre dans lequel ces données ont été inscrites, c'est-à-dire le rang de leur clé de chiffrement dans la liste ordonnée de clés générées. En effet, chaque donnée peut être lue et déchiffrée en commandant l'initialisation de l'unité KGEN avec la valeur initiale IVAL adéquate et en commandant la génération d'une clé un nombre de fois correspondant au rang de la clé de chiffrement de la donnée, dans la liste de clés générées. Chaque donnée peut être également lue et déchiffrée à l'aide d'une clé obtenue en initialisant l'unité KGEN avec la valeur de la clé SK<n> ayant un rang n dans la liste de clés générées, immédiatement inférieur à celui n+1 de la clé SK<n+1 > à utiliser pour déchiffrer la donnée à lire, en application de la formule (2).

L'opération cryptographique réalisée par l'unité de calcul cryptographique ECDC n'est pas nécessairement une opération de chiffrement ou de déchiffrement. En effet, cette opération peut réaliser également un calcul de signature. L'unité ECDC peut appliquer la même fonction cryptographique pour chiffrer et déchiffrer une donnée ou appliquer des fonctions différentes.

## Revendications

1. Procédé d'accès en écriture ou en lecture par un composant électronique (IC1, IC2) à des adresses de mémorisation (AD) de données (D, ED), comprenant des étapes consistant à :

   générer une première clé secrète (SK1) pour une première donnée d'une liste ordonnée de données lues ou à écrire, et

pour chaque donnée de la liste, suivant la première donnée, générer une clé secrète distincte (SK2, ... SKn) à l'aide d'une fonction déterministe appliquée à une clé secrète (SK1, ...) générée pour une précédente donnée de la liste, et à la donnée précédente avant ou après application à la donnée précédente d'une opération cryptographique, et appliquer l'opération cryptographique à la donnée en utilisant la clé secrète générée pour la donnée,

**caractérisé en ce qu'**il comprend des étapes de comparaison d'une dernière donnée accédée de la liste et traitée par l'opération cryptographique à une donnée de référence, et si la comparaison révèle une différence, de passage du composant électronique à un état d'erreur.

2. Procédé selon la revendication 1, dans lequel la fonction déterministe est une fonction de génération de nombres pseudo-aléatoires.

3. Procédé selon l'une des revendications 1 et 2, dans lequel la génération d'une clé secrète (SK2, ... SKn) pour une donnée de la liste est déclenchée par une instruction particulière détectée avant l'accès à la donnée, durant l'exécution d'un programme par le composant électronique.

4. Procédé selon l'une des revendications 1 et 2, dans lequel la génération d'une clé secrète (SK2, ... SKn) pour une donnée de la liste est déclenchée lorsque l'adresse de la donnée appartient à un ensemble d'adresses particulier.

5. Procédé selon l'une des revendications 3 et 4, dans lequel si une clé secrète n'est pas générée pour une donnée accédée, l'opération cryptographique appliquée à la donnée accédée utilise une clé secrète commune (SSK).

6. Procédé selon l'une des revendications 1 à 5, dans lequel la première clé secrète (SK1) est générée en appliquant la fonction déterministe à une valeur initiale (IVAL).

7. Procédé selon l'une des revendications 1 à 6, comprenant deux accès successifs en lecture à une même adresse de mémorisation de donnée, effectués en utilisant deux clés secrètes (SK2, ... SKn) distinctes afin que l'opération cryptographique fournisse deux données différentes.

8. Procédé selon l'une des revendications 1 à 7, comprenant deux accès successifs en lecture à deux adresses de mémorisation distinctes de donnée, effectués en utilisant deux clés secrètes distinctes (SK2, ... SKn) telles que l'opération cryptographique fournit deux données identiques.

9. Composant électronique (IC, IC1), **caractérisé en ce qu'**il est configuré pour mettre en oeuvre le procédé selon l'une des revendications 1 à 8.

10. Composant électronique selon la revendication 9, comprenant un processeur (MP) configuré pour mettre en oeuvre le procédé selon l'une des revendications 1 à 8.

11. Composant électronique selon la revendication 9, comprenant un processeur (MP), des mémoires (MEM1, MEM2, MEM3) connectées au processeur par un bus (ADB), et un dispositif de contremesure (PRD) interposé entre le processeur et le bus et configuré pour mettre en oeuvre le procédé selon l'une des revendications 1 à 8

12. Composant électronique selon la revendication 9, comprenant un processeur (MP), des mémoires (MEM1, MEM2, MEM3) connectées au processeur par un bus (ADB), et un dispositif de contremesure (PRD1, PRD2, PRD3) interposé entre chaque mémoire et le bus, et configuré pour mettre en oeuvre le procédé selon l'une des revendications 1 à 8.

13. Dispositif portable à microcircuit, **caractérisé en ce qu'**il comprend un composant électronique (IC, IC1) selon l'une des revendications 9 à 12.


**Patentansprüche**

1. Schreib- oder Lese-Zugriffsverfahren auf Speicheradressen (AD) von Daten (D, ED) durch ein elektronisches Bauteil (IC1, IC2) umfassend die folgenden Schritte, die darin bestehen:

einen ersten Geheimschlüssel (SK1) für ein erstes Datum einer geordneten Liste von gelesenen oder zu schreibenden Daten zu generieren und

für jedes, dem ersten Datum folgende Datum der Liste, einen unterschiedlichen Geheimschlüssel (SK2, ... SKn) mit Hilfe einer deterministischen Funktion zu generieren, die auf einen für ein vorhergehendes Datum der Liste generierten Geheimschlüssel (SK1, ...), und auf das vorhergehende Datum angewendet wird und zwar vor oder nach der Anwendung einer kryptografischen Operation auf das vorhergehende Datum, und die kryptografische Operation unter Verwendung des für das Datum generierten Geheimschlüssels auf das Datum anzuwenden,

**dadurch gekennzeichnet**, das es Schritte des Vergleichs eines zuletzt zugegriffenen und durch die kryptografische Operation aufbereiteten Datums der Liste mit einem Bezugsdatum und, falls der Vergleich eine Differenz offenbart, des Übergangs des elektronischen Bauteils in einen Fehlerstatus umfasst.

2. Verfahren nach Anspruch 1, bei dem die deterministische Funktion eine Funktion der Generierung von pseudozufälligen Zahlen ist.

3. Verfahren nach einem der Ansprüche 1 und 2, bei dem die Generierung eines Geheimschlüssels (SK2, ... SKn) für ein Datum der Liste durch einen, vor dem Zugriff auf das Datum detektierten Sonderbefehl während der Ausführung eines Programms durch das elektronische Bauteil ausgelöst wird.

4. Verfahren nach einem der Ansprüche 1 und 2, bei dem die Generierung eines Geheimschlüssels (SK2, ... SKn) für ein Datum der Liste ausgelöst wird, wenn die Datumsadresse zu einem besonderen Adressensatz gehört.

5. Verfahren nach einem der Ansprüche 3 und 4, bei dem die, auf das zugegriffene Datum angewendete kryptografische Operation einen gemeinsamen Geheimschlüssel (SSK) benutzt, wenn ein Geheimschlüssel nicht für ein zugegriffenes Datum generiert wird.

6. Verfahren nach einem der Ansprüche 1 bis 5, bei dem der erste Geheimschlüssel (SK1) unter Anwendung der deterministischen Funktion auf einen Initialwert (IVAL) generiert wird.

7. Verfahren nach einem der Ansprüche 1 bis 6, umfassend zwei aufeinanderfolgende Lesezugriffe auf eine selbe Datumsspeicheradresse, die unter Verwendung zweier unterschiedlicher Geheimschlüssel (SK2, ... SKn) ausgeführt werden, damit die kryptografische Operation zwei unterschiedliche Daten liefert.

8. Verfahren nach einem der Ansprüche 1 bis 7, umfassend zwei aufeinanderfolgende Lesezugriffe auf zwei unterschiedliche Datumsspeicheradressen, die unter Verwendung zweier unterschiedlicher Geheimschlüssel (SK2, ... SKn) ausgeführt werden, so dass die kryptografische Operation zwei identische Daten liefert.

9. Elektronisches Bauteil (IC, IC1), **dadurch gekennzeichnet, dass** es konfiguriert ist, um das Verfahren nach einem der Ansprüche 1 bis 8 durchzuführen.

10. Elektronisches Bauteil nach Anspruch 9, umfassend einen Prozessor (MP), der konfiguriert ist, um das Verfahren nach einem der Ansprüche 1 bis 8 durchzuführen.

11. Elektronisches Bauteil nach Anspruch 9, umfassend einen Prozessor (MP), über einen Bus (ADB) an den Prozessor angeschlossene Speicher (MEM1, MEM2, MEM3), und eine Gegenmassnahmenvorrichtung (PRD), die zwischen dem Prozessor und dem Bus zwischengeschaltet und konfiguriert ist, um das Verfahren nach einem der Ansprüche 1 bis 8 durchzuführen.

12. Elektronisches Bauteil nach Anspruch 9, umfassend einen Prozessor (MP), über einen Bus (ADB) an den Prozessor angeschlossene Speicher (MEM1, MEM2, MEM3) und eine Gegenmassnahmenvorrichtung (PRD1, PRD2, PRD3), die zwischen jedem Speicher und dem Bus zwischengeschaltet und konfiguriert ist, um das Verfahren nach einem der Ansprüche 1 bis 8 durchzuführen.

13. Tragbare Vorrichtung mit Mikroschaltung, **dadurch gekennzeichnet, dass** sie ein elektronisches Bauteil (IC, IC1) nach einem der Ansprüche 9 bis 12 umfasst.

**Claims**

1. Method of read or write access by an electronic component (IC1, IC2) to storage addresses (AD) of data (D, ED), comprising steps consisting of:

   generating a first secret key (SK1) for a first data of an ordered list of data read or to be written, and
   for each data of the list, following the first data, generating a distinct secret key (SK2, ... SKn) by means of a deterministic function applied to a secret key (SK1, ...) generated for a previous data of the list, and to the previous data before or after application of the cryptographic operation to the previous data, and applying the cryptographic operation to the data by using the secret key generated for the data,
   **characterized in that** it comprises steps of comparison of a last data accessed of the list and treated by the cryptographic operation to a reference data, and if the comparison reveals a difference, the electronic component passes into an error state.

2. Method according to claim 1, wherein the deterministic function is a generation function of pseudo-random numbers.

3. Method according to one of claims 1 and 2, wherein the generation of a secret key (SK2, ... SKn) for a data of the list is started by a particular instruction detected before the access to the data, during the execution of a program by the electronic component.

4. Method according to one of claims 1 and 2, wherein the generation of a secret key (SK2, ... SKn) for a data of the list is started when the address of the data belongs to an ensemble of particular addresses.

5. Method according to one of claims 3 and 4, wherein if a secret key is not generated for an accessed data, the cryptographic operation applied to the accessed data uses a common secret key (SSK).

6. Method according to one of claims 1 to 5, wherein the first secret key (SK1) is generated by applying the deterministic function to an initial value (IVAL).

7. Method according to one of claims 1 to 6, comprising two consecutive read accesses to a same storage address of data, carried out by using two distinct secret keys (SK2, ... SKn) so that the cryptographic operation supplies two different data.

8. Method according to one of claims 1 to 7, comprising two consecutive read accesses to two distinct data storage addresses, carried out by using two distinct secret keys (SK2, ... SKn) such that the cryptographic operation supplies two identical data.

9. An electronic component (IC, IC1), **characterized in that** it is configured to implement the method according to one of claims 1 to 8.

10. An electronic component according to claim 9, comprising a processor (MP) configured to implement the method according to one of claims 1 to 8.

11. An electronic component according to claim 9, comprising a processor (MP), memories (MEM1, MEM2, MEM3) connected to the processor by a bus (ADB), and a countermeasure device (PRD) interposed between each memory and the bus and configured to implement the method according to one of claims 1 to 8.

12. An electronic component according to claim 9, comprising a processor (MP), memories (MEM1, MEM2, MEM3) connected to the processor by a bus (ADB), and a countermeasure device (PRD1, PRD2, PRD3) interposed between each memory and the bus, and configured to implement the method according to one of claims 1 to 8.

13. A microcircuit portable device, **characterized in that** it comprises an electronic component (IC, IC1) according to one of claims 9 to 12.

Fig. 1

Fig. 2A
Fig. 2B
Fig. 2C
Fig. 2D

Fig. 3A
Fig. 3B
Fig. 3C
Fig. 3D

Fig. 4

Fig. 5

IC1

MP  MEM1 (ROM)  CAU

ADB PRD

MEM2 (EEPROM)  MEM3 (RAM)  INT

## Fig. 6

P1 — RD MEM[AD]

S1 — ED=RD(AD)

S2 — AD∈USD?

Y

S3 — SK1=PRF(SK0)
SK0=SK1

S4 — D=CF(ED,SK1)

N

S5 — AD∈SD?

Y

S6 — D=CF(ED,SSK)

N

S7 — D=ED

End

## Fig. 7

Fig. 8

P2 — WR[D,AD]

S11 — AD∈USD?  → N

Y

S12 — SK1=PRF(SK0)
SK0=SK1

S15 — AD∈SD? → N

Y

S13 — ED=CF(D,SK1)

S16 — ED=CF(D,SSK)

S17 — ED=D

S14 — WR(ED,AD)

End

MEM1
IVAL2
SD

AD
ADEC

SYNC1
KGN1

MEM2
IVAL1

AD
ADEC

SYNC2
KGN2

ECDC1

MUX2

MUX1

ECDC2

MUX4

MUX3

D

SSK1

D

SSK2

PRD1

PRD2

Fig. 9

**EP 2 284 748 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007069236 A